# EUROPEAN PATENT APPLICATION

(11) **EP 4 571 057 A1**
(43) Date of publication of application: **18.06.2025**
(21) Application number: 23852605.7
(22) Date of filing: 09.08.2023
(51) Int. Cl.: F01D 25/00, F02C 7/00, F16B 5/06

(54) **GAS TURBINE ASSEMBLY**

(30) Priority: 12.08.2022 JP 2022128760
(71) Applicant: KAWASAKI JUKOGYO KABUSHIKI KAISHA, Kobe-shi, Hyogo 650-8670 (JP)
(72) Inventor: SASAKI, Hirokazu, Kobe-shi, Hyogo 650-8670 (JP); ANDO, Takahiro, Kobe-shi, Hyogo 650-8670 (JP)
(74) Representative: Dantz, Jan Henning
(86) International application number: PCT/JP2023/029126
(87) International publication number: WO 2024/034643

(57) **Abstract**

An assembly of a gas turbine includes: a metal structure including a bolt hole; a composite material structure overlapping the metal structure; a retainer including a bolt hole that coincides with the bolt hole of the metal structure; and a bolt that is in the bolt hole of the retainer and the bolt hole of the metal structure and presses the composite material structure through the retainer to fix the composite material structure to the metal structure. The retainer includes: a first pressing surface that presses the metal structure at an outside of the composite material structure; and a second pressing surface that presses the composite material structure against the metal structure.

## Description

### Technical Field

The present disclosure relates to an assembly of a gas turbine.

### Background Art

PTL 1 discloses an assembly that constitutes a gas turbine and includes a composite material structure and a metal structure which are fastened to each other. In this assembly, a nut is threadedly engaged with a bolt inserted into a bolt hole of the composite material structure and a bolt hole of the metal structure, and a retainer including a flange is sandwiched between a head portion of the bolt and the composite material structure.

### Citation List

### Patent Literature

PTL 1: US 2017/0268546 A1

### Summary of Invention

### Technical Problem

According to a structure including a bolt hole, stress may concentrate in the vicinity of the bolt hole. When the bolt hole is formed at the composite material structure, reinforcing fibers are cut at the bolt hole, and therefore, the strength of the composite material structure deteriorates more easily than the metal structure.

An object of one aspect of the present disclosure is to prevent the deterioration of the strength of a structure that constitutes a gas turbine and includes a composite material structure and a metal structure which are fastened to each other.

### Solution to Problem

An assembly of a gas turbine according to one aspect of the present disclosure includes: a metal structure including at least one bolt hole; a composite material structure overlapping the metal structure; at least one retainer including a bolt hole that coincides with the bolt hole of the metal structure; and at least one bolt that is in the bolt hole of the retainer and the bolt hole of the metal structure and presses the composite material structure through the retainer to fix the composite material structure to the metal structure. The retainer includes: a first pressing surface that presses the metal structure at an outside of the composite material structure; and a second pressing surface that presses the composite material structure against the metal structure.

### Advantageous Effects of Invention

According to one aspect of the present disclosure, by axial force of the bolt, the first pressing surface of the retainer presses the metal structure at an outside of the composite material structure, and the second pressing surface of the retainer presses the composite material structure against the metal structure. Thus, even when the composite material structure does not include a bolt hole, the composite material structure and the metal structure are fastened to each other by the axial force of the bolt. Therefore, the strength of a structure including the composite material structure and the metal structure which are fastened to each other can be prevented from deteriorating.

### Brief Description of Drawings

FIG. 1 is a sectional view of a gas turbine according to Embodiment 1.
FIG. 2 is a sectional view of major components of FIG. 1.
FIG. 3 is a side view of an assembly constituting the gas turbine of FIG. 2.
FIG. 4 is a front view of the assembly of FIG. 3.
FIG. 5 is a sectional view taken along line IV-IV of FIG. 4.
FIG. 6 is a perspective view of a fastening structure of FIG. 5.
FIG. 7 is a sectional view of the fastening structure of the assembly according to Embodiment 2.
FIG. 8 is a sectional view of the fastening structure of the assembly according to Embodiment 3.
FIG. 9 is a sectional view of the fastening structure of the assembly according to Embodiment 4.

### Description of Embodiments

Hereinafter, embodiments will be described with reference to the drawings.

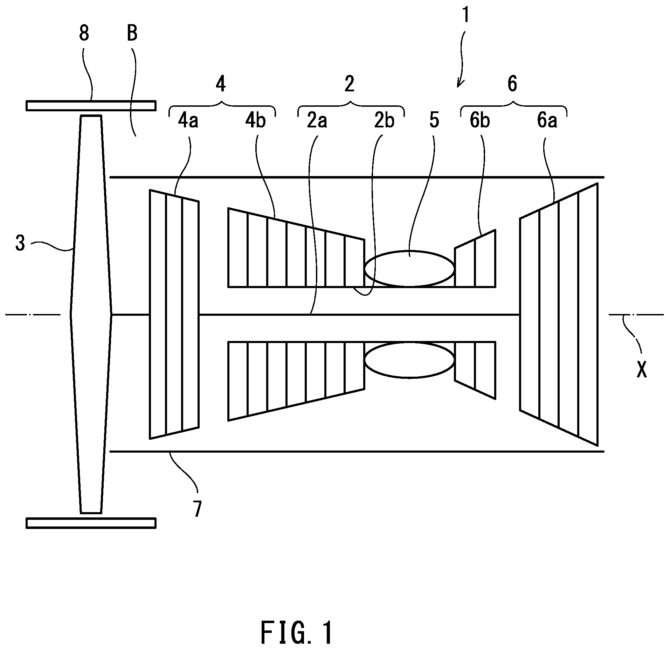

FIG. 1 is a sectional view of a gas turbine 1 according to an embodiment. As shown in FIG. 1, the gas turbine 1 includes a rotating shaft 2, a fan 3, a compressor 4, a combustor 5, a turbine 6, a casing 7, and a fan case assembly 8. The rotating shaft 2 extends in a front-rear direction of the gas turbine 1. The fan 3 is connected to a front portion of the rotating shaft 2 and rotates together with the rotating shaft 2. The compressor 4, the combustor 5, and the turbine 6 are lined up in this order from a front side to a rear side along the rotating shaft 2. The casing 7 accommodates the rotating shaft 2, the compressor 4, the combustor 5, and the turbine 6. Each of the casing 7 and the fan case assembly 8 is a tubular object including an axis that coincides with an axis X of the rotating shaft 2.

The gas turbine 1 is, for example, a two-shaft gas turbine engine, but may be a three-shaft gas turbine engine or the like. The compressor 4 includes a low pressure compressor 4a and a high pressure compressor 4b located behind the low pressure compressor 4a. The turbine 6 includes a high pressure turbine 6b and a low pressure turbine 6a located behind the high pressure turbine 6b. The rotating shaft 2 includes a low pressure shaft 2a and a high pressure shaft 2b. The low pressure shaft 2a couples the low pressure compressor 4a to the low pressure turbine 6a. The high pressure shaft 2b couples the high pressure compressor 4b to the high pressure turbine 6b. The high pressure shaft 2b is a tubular shaft including a hollow space therein. The low pressure shaft 2a is in the hollow space of the high pressure shaft 2b. The low pressure turbine 6a is coupled through the low pressure shaft 2a to the fan 3 located in front of the compressor 4.

The fan 3 is covered with the tubular fan case assembly 8. A cylindrical bypass passage B is located between the casing 7 and the fan case assembly 8. Air sucked by the fan 3 flows through the bypass passage B and is ejected rearward to generate propulsive force.

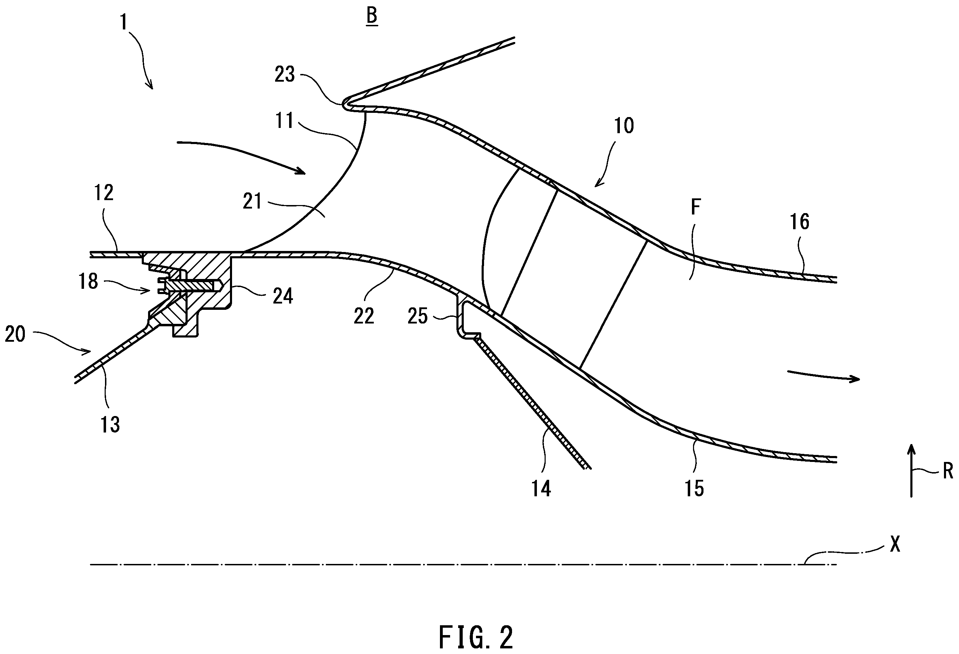

FIG. 2 is a sectional view of major components of FIG. 1. FIG. 2 is an enlarged sectional view showing a portion where the air is guided from the fan 3 to the compressor 4, and its vicinity. The gas turbine 1 includes a substantially cylindrical structure 10. An axis of the structure 10 coincides with the axis X of the rotating shaft of the gas turbine 1. A direction in which the axis X extends is referred to as a gas turbine axial direction X. A direction orthogonal to the gas turbine axial direction X is referred to as a gas turbine radial direction R. The structure 10 includes a stator vane structure 11, a front channel structure 12, a front panel 13, a rear panel 14, a rear channel structure 15, an outer case 16, and an air passage F.

The stator vane structure 11 is a metal structure. The stator vane structure 11 includes stator vanes 21, an inner housing 22, an outer housing 23, a front bracket 24, and a rear bracket 25. The stator vanes 21 are located at intervals in a circumferential direction around the axis X. The stator vanes 21 straighten the air flowing from the front side toward the compressor in the gas turbine axial direction X. Each of the inner housing 22 and the outer housing 23 is a cylindrical body including a center line that is the axis X. Inner ends of the stator vanes 21 in the gas turbine radial direction R are connected to an outer peripheral surface of the inner housing 22. Outer ends of the stator vanes 21 in the gas turbine radial direction R are connected to an inner peripheral surface of the outer housing 23. The bypass passage B is defined at an outside of the outer housing 23 in the gas turbine radial direction R. The front bracket 24 projects inward in the gas turbine radial direction R from a front portion of the inner housing 22. The rear bracket 25 projects inward in the gas turbine radial direction R from a rear portion of the inner housing 22.

The front channel structure 12 is located in front of the stator vane structure 11 in the gas turbine axial direction X and is coupled to the inner housing 22 from the front side. The front panel 13 is located inside the front channel structure 12 in the gas turbine radial direction R and is coupled to a below-described fastening structure 18.

The front panel 13 is a composite material structure including fiber-reinforced resin. The front panel 13 is fastened to the front bracket 24 of the stator vane structure 11. The front panel 13 and the stator vane structure 11 are tubular structures that are located around the rotating shaft of the gas turbine 1 and overlap each other in the gas turbine axial direction X. The front channel structure 12, the front panel 13, and the stator vane structure 11 are combined with each other by the fastening structure 18 to form an assembly 20. The fastening structure 18 for the front channel structure 12, the front panel 13, and the front bracket 24 will be described later.

The rear panel 14 is located inside the rear channel structure 15 in the gas turbine radial direction R and is coupled to the rear bracket 25 of the stator vane structure 11. A transmission that changes the speed of the power of the rotating shaft of the gas turbine 1 and transmits the power to the fan, a bearing that supports the rotating shaft of the gas turbine 1, and the like are located in an internal space defined by the front panel 13, the inner housing 22 of the stator vane structure 11, and the rear panel 14.

The rear channel structure 15 is located behind the stator vane structure 11 in the gas turbine axial direction X and is coupled to the inner housing 22 from the rear side. The outer case 16 is located away from and outside the rear channel structure 15 in the gas turbine radial direction R. The outer case 16 is located behind the stator vane structure 11 in the gas turbine axial direction X and is coupled to the outer housing 23 from the rear side.

Outer peripheral surfaces of the front channel structure 12, the inner housing 22, and the rear channel structure 15 are smoothly continuous with each other in the gas turbine axial direction X. Inner peripheral surfaces of the outer housing 23 and the outer case 16 are smoothly continuous with each other in the gas turbine axial direction X. The air passage F is defined between the outer peripheral surfaces of the front channel structure 12, the inner housing 22, and the rear channel structure 15 and the inner peripheral surfaces of the outer housing 23 and the outer case 16. The air passage F is open toward the front side, i.e., toward the fan 3. The air flowing into the air passage F from the fan 3 is guided to the compressor 4.

When at least one of the front channel structure 12, the rear panel 14, the rear channel structure 15, and the outer case 16 is a composite material structure including fiber-reinforced resin, the composite material structure may be fastened to the stator vane structure 11 by the same structure as the fastening structure 18.

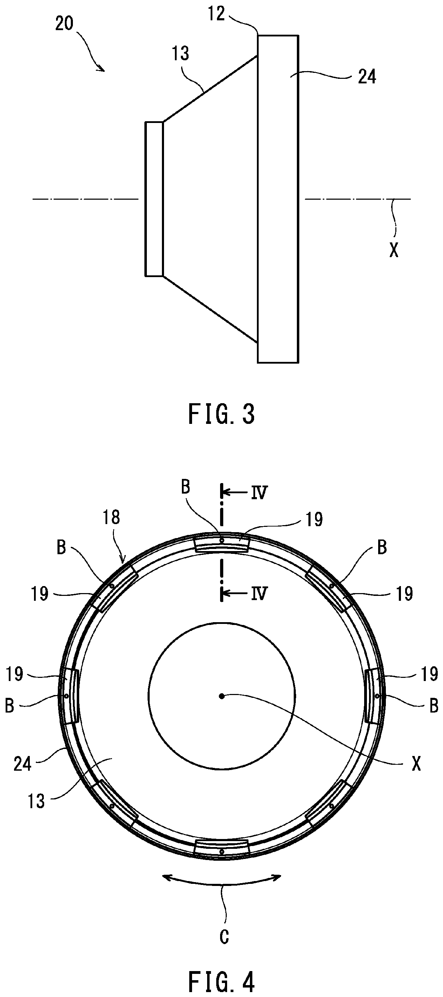

FIG. 3 is a side view of the assembly 20 constituting the gas turbine 1 of FIG. 2. FIG. 4 is a front view of the assembly 20 of FIG. 3. In FIGS. 3 and 4, the front panel 13 and the front bracket 24 are simplified. The front panel 13 includes, for example, a substantially truncated cone shape. The front bracket 24 includes, for example, a substantially ring shape. The front panel 13 overlaps the front bracket 24 from the front side in the gas turbine axial direction X.

The fastening structure 18 that fastens the front panel 13 and the front bracket 24 to each other includes retainers 19 and bolts B corresponding to the respective retainers 19. The front panel 13 is fastened to the front bracket 24 with the bolts B through the retainers 19. The retainers 19 are located at intervals in a circumferential direction C around the axis X.

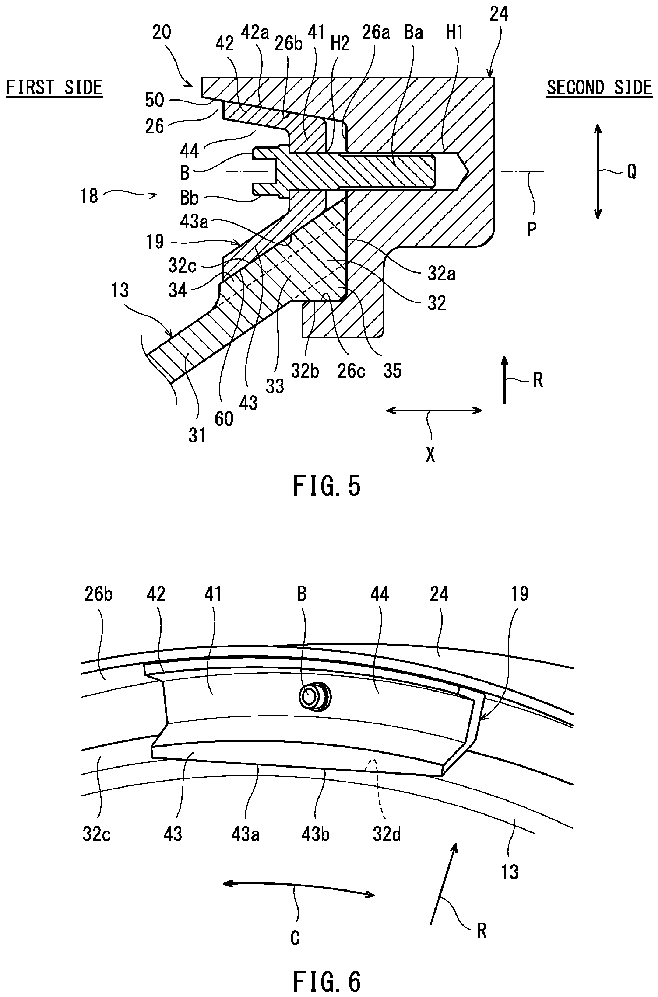

FIG. 5 is a sectional view taken along line IV-IV of FIG. 4. In the following description, the front bracket 24 is referred to as a metal structure 24, and the front panel 13 is referred to as a composite material structure 13. As shown in FIG. 5, the metal structure 24 includes bolt holes H1 with which the bolts B are threadedly engaged. The bolt holes H1 are located at intervals in the circumferential direction C around the axis X (see FIG. 4). Each of the bolt holes H1 includes an internal thread on its inner peripheral surface. For example, the bolt hole H1 may be formed in such a manner that an insert structure including the internal thread is inserted into a hole of the metal structure 24. Each of the number of bolt holes H1 used and the number of bolts B used may be any number.

A direction in which an axis P of the bolt B extends is referred to as a bolt axial direction P. A direction orthogonal to the bolt axial direction P is referred to as a vertical plane direction Q. The metal structure 24 includes an annular recess 26 that is open toward a first side in the bolt axial direction P and extends in the circumferential direction around the axis X. The first side in the bolt axial direction P corresponds to the front side in the gas turbine axial direction X, and a second side in the bolt axial direction P corresponds to the rear side in the gas turbine axial direction X. The bolt holes H1 are located at a bottom portion of the annular recess 26.

The annular recess 26 includes a first pressure receiving surface 26a, a second pressure receiving surface 26b, and a displacement restricting surface 26c. The first pressure receiving surface 26a is a bottom surface of the annular recess 26 and faces the first side in the bolt axial direction P. The bolt holes H1 are open on the first pressure receiving surface 26a.

The second pressure receiving surface 26b extends toward the first side in the bolt axial direction P from one side of the first pressure receiving surface 26a in the vertical plane direction Q. Specifically, the second pressure receiving surface 26b extends toward the first side in the bolt axial direction P from an outer end of the first pressure receiving surface 26a in the gas turbine radial direction R. The second pressure receiving surface 26b is inclined relative to the bolt axial direction P so as to separate from the axis P of the bolt B as the second pressure receiving surface 26b extends from the second side to the first side in the bolt axial direction P.

The displacement restricting surface 26c extends toward the first side in the bolt axial direction P from the other side of the first pressure receiving surface 26a in the vertical plane direction Q. Specifically, the displacement restricting surface 26c extends toward the first side in the bolt axial direction P from an inner end of the first pressure receiving surface 26a in the gas turbine radial direction R. The displacement restricting surface 26c extends in parallel with the bolt axial direction P.

The composite material structure 13 includes: a main body portion 31 including a truncated cone shape; and an outer edge portion 32 that is continuous with a large-diameter side of the main body portion 31. The outer edge portion 32 of the composite material structure 13 overlaps the metal structure 24 from the first side in the bolt axial direction P. The composite material structure 13 is located such that when viewed in the bolt axial direction P, the bolt holes H1 of the metal structure 24 are located outside the composite material structure. The outer edge portion 32 is thicker than the main body portion 31. The outer edge portion 32 includes a core portion 33, an outer thickness-increased portion 34, and an inner thickness-increased portion 35. The core portion 33 is the same in thickness as the main body portion 31 and is continuous with the main body portion 31. The outer thickness-increased portion 34 is adjacently located outside the core portion 33 in the gas turbine radial direction R. The inner thickness-increased portion 35 is adjacently located inside the core portion 33 in the gas turbine radial direction R.

The outer edge portion 32 of the composite material structure 13 includes a contact surface 32a facing the second side in the bolt axial direction P. The contact surface 32a of the composite material structure 13 contacts the first pressure receiving surface 26a of the metal structure 24 in the bolt axial direction P. The outer edge portion 32 of the composite material structure 13 includes a displacement restricting surface 32b facing inward in the gas turbine radial direction R. The displacement restricting surface 32b extends in parallel with the bolt axial direction P. The displacement restricting surface 32b of the composite material structure 13 may be formed at the time of the molding of the composite material structure 13 or may be formed by subjecting the inner thickness-increased portion 35 to machining after the molding of the composite material structure 13. The composite material structure 13 and the metal structure 24 may directly contact each other or may indirectly contact each other.

The displacement restricting surface 32b of the composite material structure 13 contacts the displacement restricting surface 26c of the metal structure 24 in the vertical plane direction Q. The displacement restricting surface 26c of the metal structure 24 is a cylindrical outer peripheral surface, and the displacement restricting surface 32b of the composite material structure 13 is a cylindrical inner peripheral surface. To be specific, the composite material structure 13 is fitted to the metal structure 24. Therefore, by the displacement restricting surface 26c of the metal structure 24 and the displacement restricting surface 32b of the composite material structure 13, the composite material structure 13 is restricted from being displaced relative to the metal structure 24 in the vertical plane direction Q.

The outer edge portion 32 of the composite material structure 13 includes a pressure receiving surface 32c facing outward in the gas turbine radial direction R. The pressure receiving surface 32c of the composite material structure 13 may be formed at the time of the molding of the composite material structure 13 or may be formed by subjecting the outer thickness-increased portion 34 to machining after the molding of the composite material structure 13. The pressure receiving surface 32c of the composite material structure 13 and the second pressure receiving surface 26b of the metal structure 24 are opposed to each other in the vertical plane direction Q across the axis P of the bolt B. The pressure receiving surface 32c of the composite material structure 13 is inclined relative to the bolt axial direction P so as to separate from the axis P of the bolt B as the pressure receiving surface 32c extends from the second side to the first side in the bolt axial direction P.

The pressure receiving surface 32c of the composite material structure 13 and the second pressure receiving surface 26b of the metal structure 24 are located so as to separate from each other in the vertical plane direction Q as the pressure receiving surface 32c and the second pressure receiving surface 26b extend from the second side to the first side in the bolt axial direction P. To be specific, a pressure receiving surface set 50 including the pressure receiving surface 32c of the composite material structure 13 and the second pressure receiving surface 26b of the metal structure 24 includes a tapered shape that tapers toward the second side in the bolt axial direction P. A retainer arrangement space where the retainers 19 are located is defined between the second pressure receiving surface 26b of the metal structure 24 and the pressure receiving surface 32c of the composite material structure 13.

Each of the retainers 19 includes a base portion 41, a first pressing portion 42, and a second pressing portion 43. A section of the retainer 19 which is taken along the gas turbine axial direction X and the gas turbine radial direction R includes a concave shape as a whole. The retainer 19 is made of, for example, metal. The base portion 41 includes a bolt hole H2 that coincides with the bolt hole H1 of the metal structure 24. The bolt B includes a shaft portion Ba and a head portion Bb located at an end portion of the shaft portion Ba. The shaft portion Ba of the bolt B is inserted into the bolt holes H1 and H2 and is threadedly engaged with the internal thread of the bolt hole H1. The head portion Bb of the bolt B presses the base portion 41 of the retainer 19 toward the second side in the bolt axial direction P.

The first pressing portion 42 projects toward the first side in the bolt axial direction P from one of end portions of the base portion 41 in the vertical plane direction Q. Specifically, the first pressing portion 42 projects toward the first side in the bolt axial direction P from an outer end portion of the base portion 41 in the gas turbine radial direction R. The second pressing portion 43 projects toward the first side in the bolt axial direction P from the other end portion of the base portion 41 in the vertical plane direction Q. Specifically, the second pressing portion 43 projects toward the first side in the bolt axial direction P from an inner end portion of the base portion 41 in the gas turbine radial direction R. The base portion 41, the first pressing portion 42, and the second pressing portion 43 define a recess 44 where the head portion Bb of the bolt B is located.

The first pressing portion 42 includes a first pressing surface 42a that presses the second pressure receiving surface 26b of the metal structure 24 at an outside of the composite material structure 13. The second pressing portion 43 includes a second pressing surface 43a that presses the pressure receiving surface 32c of the outer edge portion 32 of the composite material structure 13 toward the metal structure 24. A pressing surface set 60 including the first pressing surface 42a and the second pressing surface 43a includes a tapered shape that tapers toward the second side in the bolt axial direction P along the pressure receiving surface set 50.

When the bolt B is threadedly engaged with the bolt hole H1 of the metal structure 24 through the bolt hole H2 of the retainer 19, the head portion Bb of the bolt B presses the base portion 41 of the retainer 19 toward the second side in the bolt axial direction P. By axial force of the bolt B, the first pressing surface 42a of the retainer 19 presses the second pressure receiving surface 26b of the metal structure 13 without through the composite material structure 13, and the second pressing surface 43a of the retainer 19 presses the pressure receiving surface 32c of the composite material structure 13 toward the metal structure 24.

The retainer 19 is press-fitted like a wedge into the retainer arrangement space defined by the pressure receiving surface set 50. The vector of a load applied from the second pressing surface 43a of the retainer 19 to the composite material structure 13 includes a component directed to the second side in the bolt axial direction P. Therefore, the composite material structure 13 is stably fixed to the metal structure 24.

FIG. 6 is a perspective view of the fastening structure 18 of FIG. 5. As shown in FIG. 6, the retainer 19 includes a rotation restricting surface 43b, and the composite material structure 13 includes a rotation restricting surface 32d. The rotation restricting surfaces 32d and 43b interfere with each other in the circumferential direction C to restrict the composite material structure 13 from rotating relative to the metal structure 24. For example, the rotation restricting surface 32d of the composite material structure 13 is a concave surface that is recessed inward in the gas turbine radial direction R on the pressure receiving surface 32c of the composite material structure 13. The rotation restricting surface 43b of the retainer 19 is a convex surface projecting along the rotation restricting surface 32d of the composite material structure 13.

The rotation restricting surfaces 32d and 43b are not limited to these and may be surfaces that restrict the composite material structure 13 from rotating relative to the metal structure 24. For example, the rotation restricting surface 32d of the composite material structure 13 may be a convex surface, and the rotation restricting surface 43b of the retainer 19 may be a concave surface. Moreover, an end surface of the retainer 19 in the circumferential direction C may be the rotation restricting surface of the retainer 19, and an outer surface of a projection projecting from an outer surface of the composite material structure 13 at an outside of the retainer 19 in the circumferential direction C may be the rotation restricting surface of the composite material structure 13.

According to the above-described configuration, by the axial force of the bolt B, the first pressing surface 42a of the retainer 19 presses the second pressure receiving surface 26b of the metal structure 24 at an outside of the composite material structure 13, and the second pressing surface 43a of the retainer 19 presses the composite material structure 13 against the metal structure 24. Thus, even when the composite material structure 13 does not include a bolt hole, the composite material structure 13 and the metal structure 24 are fastened to each other by the axial force of the bolt B. Therefore, the strength of the fastening structure 18 including the composite material structure 13 and the metal structure 24 which are fastened to each other can be prevented from deteriorating. Moreover, when the retainer 19 is thin, the first and second pressing portions 42 and 43 of the retainer 19 can be displaced in the radial direction, and this can absorb machining tolerances of the composite material structure 13 and the metal structure 24.

### Embodiment 2

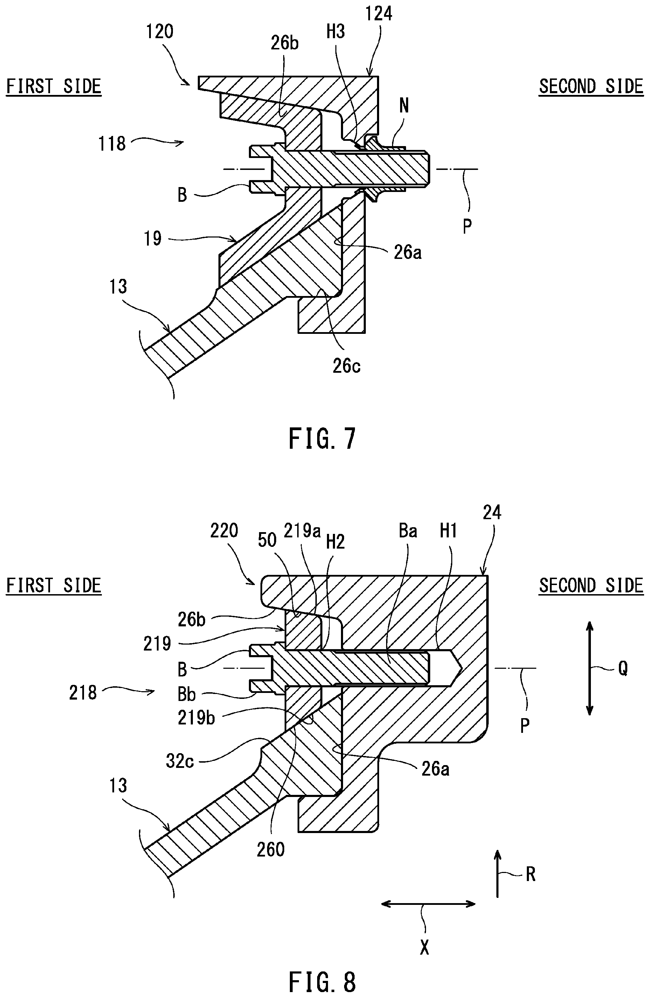

FIG. 7 is a sectional view of a fastening structure 118 of an assembly 120 according to Embodiment 2. The same reference signs are used for the same components as Embodiment 1, and explanations thereof are omitted. As shown in FIG. 7, in the fastening structure 118 of the assembly 120 according to Embodiment 2, a shank nut N is used as the internal thread with which the bolt B is threadedly engaged. To be specific, the shank nut N is fixed to a bolt hole H3, into which the bolt B is inserted, of a metal structure 124 from the second side in the bolt axial direction P. The bolt B inserted into the bolt hole H2 of the retainer 19 from the first side in the bolt axial direction P is inserted into the bolt hole H3 of the metal structure 24 and is threadedly engaged with the internal thread of the shank nut N. Thus, the axial force of the bolt B is transmitted to the composite material structure 13 through the retainer 19, and the composite material structure 13 is fastened to the metal structure 24. Since the other components are the same as those in Embodiment 1, explanations thereof are omitted. Moreover, when the retainer 19 is thin, the first and second pressing portions 42 and 43 of the retainer 19 can be displaced in the radial direction, and this can absorb the machining tolerances of the composite material structure 13 and the metal structure 24.

### Embodiment 3

FIG. 8 is a sectional view of a fastening structure 218 of an assembly 220 according to Embodiment 3. The same reference signs are used for the same components as Embodiment 1, and explanations thereof are omitted. As shown in FIG. 8, in the fastening structure 218 of the assembly 220 according to Embodiment 3, the shape of a retainer 219 is different from that in Embodiment 1. A section of the retainers 19 which is taken along the gas turbine axial direction X and the gas turbine radial direction R includes a trapezoidal shape as a whole. The retainer 219 includes the bolt hole H2 that coincides with the bolt hole H1 of the metal structure 24.

The retainer 219 includes a first pressing surface 219a that presses the second pressure receiving surface 26b of the metal structure 24 at an outside of the composite material structure 13. The retainer 219 includes a second pressing surface 219b that presses the pressure receiving surface 32c of the composite material structure 13 toward the metal structure 24. The first pressing surface 219a and the second pressing surface 219b are end surfaces of the retainer 219 which are directed in respective directions opposite to each other in the vertical plane direction Q. A pressing surface set 260 including the first pressing surface 219a and the second pressing surface 219b includes a tapered shape that tapers toward the second side in the bolt axial direction P along the pressure receiving surface set 50.

When the shaft portion Ba of the bolt B is threadedly engaged with the bolt hole H1 of the metal structure 24 through the bolt hole H2 of the retainer 19, the head portion Bb of the bolt B presses the retainer 219 toward the second side in the bolt axial direction P. By the axial force of the bolt B, the first pressing surface 219a of the retainer 219 presses the second pressure receiving surface 26b of the metal structure 24 without through the composite material structure 13, and the second pressing surface 219b of the retainer 219 presses the pressure receiving surface 32c of the composite material structure 13 toward the metal structure 24.

To be specific, the tapered pressing surface set 260 of the retainer 219 is press-fitted like a wedge into the tapered pressure receiving surface set 50. The vector of a load applied from the second pressing surface 219b of the retainer 219 to the composite material structure 13 includes a component directed to the second side in the bolt axial direction P. Therefore, the composite material structure 13 is stably fixed to the metal structure 24. Since the other components are the same as those in Embodiment 1, explanations thereof are omitted.

### Embodiment 4

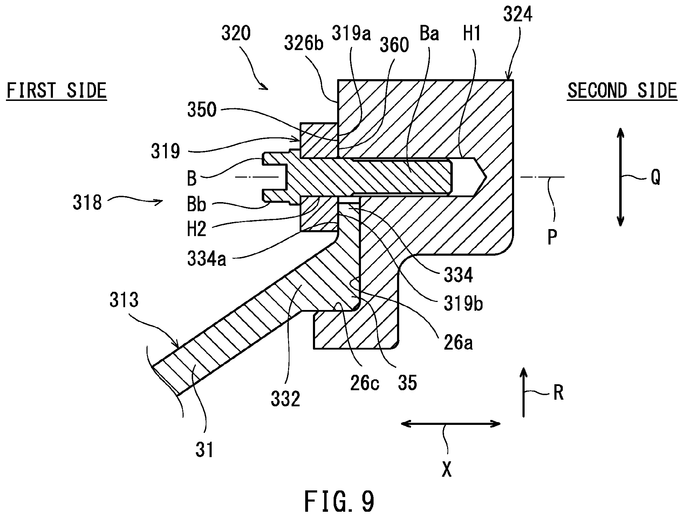

FIG. 9 is a sectional view of a fastening structure 318 of an assembly 320 according to Embodiment 4. The same reference signs are used for the same components as Embodiment 1, and explanations thereof are omitted. As shown in FIG. 9, in the fastening structure 318 of the assembly 320 according to Embodiment 4, a metal structure 324 includes a second pressure receiving surface 326b located at an opposite side of the first pressure receiving surface 26a and the displacement restricting surface 26c across the axis P of the bolt B. The second pressure receiving surface 326b is parallel to the first pressure receiving surface 26a and faces the first side in the bolt axial direction P. The second pressure receiving surface 326b is located at the first side of the first pressure receiving surface 26a in the bolt axial direction P.

The composite material structure 313 includes a flange portion 334 projecting toward the bolt B along the first pressure receiving surface 26a of the metal structure 324 at an outer edge portion 332 of the composite material structure 313. The flange portion 334 includes a pressure receiving surface 334a facing the first side in the bolt axial direction P. The pressure receiving surface 334a of the composite material structure 313 and the second pressure receiving surface 326b of the metal structure 324 extend in the vertical plane direction Q and are located on substantially the same plane. The pressure receiving surface 334a of the composite material structure 313 and the second pressure receiving surface 326b of the metal structure 324 constitute a pressure receiving surface set 350.

A section of a retainer 319 which is taken along the gas turbine axial direction X and the gas turbine radial direction R includes a rectangular shape as a whole. The retainer 319 includes the bolt hole H2 that coincides with the bolt hole H1 of the metal structure 324. The retainer 319 includes a first pressing surface 319a that presses the second pressure receiving surface 326b of the metal structure 324 at an outside of the composite material structure 313. The retainer 319 includes a second pressing surface 319b that presses the pressure receiving surface 334a of the composite material structure 313 toward the metal structure 324. The first pressing surface 319a and the second pressing surface 319b extend in the vertical plane direction Q and face the second side in the bolt axial direction P. The first pressing surface 319a and the second pressing surface 319b of the retainer 319 constitute a pressing surface set 360 extending along the pressure receiving surface set 350.

When the shaft portion Ba of the bolt B is threadedly engaged with the bolt hole H1 of the metal structure 324 through the bolt hole H2 of the retainer 319, the head portion Bb of the bolt B presses the retainer 319 toward the second side in the bolt axial direction P. By the axial force of the bolt B, the first pressing surface 319a of the retainer 319 presses the second pressure receiving surface 326b of the metal structure 324 without through the composite material structure 313, and the second pressing surface 319b of the retainer 319 presses the pressure receiving surface 334a of the composite material structure 313 toward the metal structure 324. Since the other components are the same as those in Embodiment 1, explanations thereof are omitted.

The technology of the present disclosure is applicable to not only the fastening of the front panel 13 as the composite material structure and the front channel structure 12 as the metal structure but also the fastening of another metal structure and another composite material structure. Moreover, the technology of the present disclosure is not limited to the above-described embodiments. For example, the composite material structure (13, 313) may include a bolt hole at a portion other than the fastening structure (18, 118, 218, 318). Instead of the bolt B, a stud bolt projecting from the metal structure (24, 124, 324) toward the first side in the bolt axial direction P may be used. In this case, a nut may be threadedly engaged with the stud bolt from the first side in the bolt axial direction P and may press the retainer (19, 219, 319) toward the second side in the bolt axial direction P. The metal structure and the composite material structure do not have to be tubular bodies. Instead of locating the retainers (19, 219, 319) at intervals in the circumferential direction C in the annular retainer arrangement space, one annular retainer may be located in the annular retainer arrangement space.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

An assembly of a gas turbine,
the assembly including:
a metal structure including at least one bolt hole;
a composite material structure overlapping the metal structure;
at least one retainer including a bolt hole that coincides with the bolt hole of the metal structure; and
at least one bolt that is in the bolt hole of the retainer and the bolt hole of the metal structure and presses the composite material structure through the retainer to fix the composite material structure to the metal structure, wherein
the retainer includes
   a first pressing surface that presses the metal structure at an outside of the composite material structure and
   a second pressing surface that presses the composite material structure against the metal structure.

According to this configuration, by the axial force of the bolt, the first pressing surface of the retainer presses the metal structure at an outside of the composite material structure, and the second pressing surface of the retainer presses the composite material structure against the metal structure. Thus, even when the composite material structure does not include a bolt hole, the composite material structure and the metal structure are fastened to each other by the axial force of the bolt. Therefore, the strength of the structure including the composite material structure and the metal structure which are fastened to each other can be prevented from deteriorating.

### Second Aspect

The assembly according to the first aspect, wherein:
the metal structure includes a pressure receiving surface pressed by the first pressing surface;
the composite material structure includes a pressure receiving surface pressed by the second pressing surface;
the pressure receiving surface of the composite material structure and the pressure receiving surface of the metal structure are opposed to each other in a vertical plane direction orthogonal to an axis of the bolt;
a pressure receiving surface set including the pressure receiving surface of the composite material structure and the pressure receiving surface of the metal structure includes a tapered shape that tapers in a bolt axial direction in which the axis of the bolt extends; and
a pressing surface set including the first pressing surface and the second pressing surface includes a tapered shape along the pressure receiving surface set.

According to this configuration, the retainer is press-fitted like a wedge into the retainer arrangement space defined by the pressure receiving surface set including the pressure receiving surface of the composite material structure and the pressure receiving surface of the metal structure. Therefore, strong and stable fastening is realized.

### Third Aspect

The assembly according to the second aspect, wherein:
the retainer includes
   a base portion including the bolt hole,
   a first pressing portion including the first pressing surface, and
   a second pressing portion including the second pressing surface;
the first pressing portion projects in the bolt axial direction from one of end portions of the base portion; and
the second pressing portion projects in the bolt axial direction from the other end portion of the base portion.

According to this configuration, while realizing stable fastening by increasing a pressing area of the first pressing surface and a pressing area of the second pressing surface, an increase in volume of the retainer is suppressed, and this suppresses an increase in weight of the retainer.

### Fourth Aspect

The assembly according to any one of the first to third aspects, wherein the composite material structure and the metal structure include respective displacement restricting surfaces that restrict the composite material structure from being displaced in a vertical plane direction orthogonal to an axis of the bolt.

According to this configuration, the composite material structure can be positioned relative to the metal structure in the vertical plane direction orthogonal to the axis of the bolt. Therefore, work of assembling the composite material structure to the metal structure before the fastening of the bolt is facilitated, and the position of the composite material structure relative to the metal structure is stably maintained after the fastening of the bolt.

### Fifth Aspect

The assembly according to the fourth aspect, wherein:
the metal structure and the composite material structure are tubular structures that are located around a rotating shaft of the gas turbine and overlap each other in a center axis direction in which the rotating shaft extends; and
the retainer and the composite material structure include respective rotation restricting surfaces that interfere with each other in a circumferential direction around the rotating shaft to restrict the composite material structure from rotating.

According to this configuration, the tubular composite material structure can be positioned relative to the tubular metal structure in the circumferential direction around a center axis. Therefore, after the fastening of the bolt, the composite material structure is prevented from rotating relative to the metal structure.

### Sixth Aspect

The assembly according to any one of the first to fifth aspects, wherein:
the composite material structure includes
   a main body portion and
   an outer edge portion that is continuous with the main body portion and overlaps the metal structure;
the second pressing surface of the retainer presses the outer edge portion of the composite material structure toward the metal structure; and
the outer edge portion is thicker than the main body portion of the composite material structure.

According to this configuration, the pressure receiving surface of the composite material structure which is pressed by the second pressing surface of the retainer and the contact surface of the composite material structure which presses the metal structure can be accurately formed by machining while adequately maintaining the strength of the outer edge portion of the composite material structure.

### Seventh Aspect

The assembly according to any one of the first to sixth aspects, wherein:
the at least one bolt hole of the metal structure includes bolt holes located at intervals;
the at least one bolt includes bolts that are in the respective bolt holes; and
the at least one retainer includes retainers that are located at intervals so as to correspond to the respective bolt holes.

According to this configuration, the volume of the retainers located at interval is smaller than the volume of one retainer located so as to correspond to all of the bolt holes. Therefore, an increase in weight by the retainer is suppressed, and this suppresses an increase in weight of the gas turbine.

### Reference Signs List

1 gas turbine
20, 120, 220, 320 assembly
24, 124, 324 metal structure
26b, 326b pressure receiving surface
26c displacement restricting surface
H1, H3 bolt hole
13, 313 composite material structure
31 main body portion
32, 332 outer edge portion
32b displacement restricting surface
32c, 334a pressure receiving surface
32d rotation restricting surface
19, 219, 319 retainer
41 base portion
42 first pressing portion
42a, 219a, 319a first pressing surface
43 second pressing portion
43a, 219b, 319b second pressing surface
43b rotation restricting surface
H2 bolt hole
50, 350 pressure receiving surface set
60, 260, 360 pressing surface set
B bolt
Ba shaft portion
Bb head portion
P bolt axial direction
Q vertical plane direction

## Claims

1. An assembly of a gas turbine,
the assembly comprising:
a metal structure including at least one bolt hole;
a composite material structure overlapping the metal structure;
at least one retainer including a bolt hole that coincides with the bolt hole of the metal structure; and
at least one bolt that is in the bolt hole of the retainer and the bolt hole of the metal structure and presses the composite material structure through the retainer to fix the composite material structure to the metal structure, wherein
the retainer includes
a first pressing surface that presses the metal structure at an outside of the composite material structure and
a second pressing surface that presses the composite material structure against the metal structure.

2. The assembly according to claim 1, wherein:
the metal structure includes a pressure receiving surface pressed by the first pressing surface;
the composite material structure includes a pressure receiving surface pressed by the second pressing surface;
the pressure receiving surface of the composite material structure and the pressure receiving surface of the metal structure are opposed to each other in a vertical plane direction orthogonal to an axis of the bolt;
a pressure receiving surface set including the pressure receiving surface of the composite material structure and the pressure receiving surface of the metal structure includes a tapered shape that tapers in a bolt axial direction in which the axis of the bolt extends; and
a pressing surface set including the first pressing surface and the second pressing surface includes a tapered shape along the pressure receiving surface set.

3. The assembly according to claim 2, wherein:
the retainer includes
a base portion including the bolt hole,
a first pressing portion including the first pressing surface, and
a second pressing portion including the second pressing surface;
the first pressing portion projects in the bolt axial direction from one of end portions of the base portion; and
the second pressing portion projects in the bolt axial direction from the other end portion of the base portion.

4. The assembly according to any one of claims 1 to 3, wherein the composite material structure and the metal structure include respective displacement restricting surfaces that restrict the composite material structure from being displaced in a vertical plane direction orthogonal to an axis of the bolt.

5. The assembly according to claim 4, wherein:
the metal structure and the composite material structure are tubular structures that are located around a rotating shaft of the gas turbine and overlap each other in a center axis direction in which the rotating shaft extends; and
the retainer and the composite material structure include respective rotation restricting surfaces that interfere with each other in a circumferential direction around the rotating shaft to restrict the composite material structure from rotating.

6. The assembly according to any one of claims 1 to 5, wherein:
the composite material structure includes
a main body portion and
an outer edge portion that is continuous with the main body portion and overlaps the metal structure;
the second pressing surface of the retainer presses the outer edge portion of the composite material structure toward the metal structure; and
the outer edge portion is thicker than the main body portion of the composite material structure.

7. The assembly according to any one of claims 1 to 6, wherein:
the at least one bolt hole of the metal structure comprises bolt holes located at intervals;
the at least one bolt comprises bolts that are in the respective bolt holes; and
the at least one retainer comprises retainers that are located at intervals so as to correspond to the respective bolt holes.
